# EUROPEAN PATENT APPLICATION

(11) **EP 2 421 256 A1**
(43) Date of publication of application: **22.02.2012**
(21) Application number: 10764515.2
(22) Date of filing: 09.04.2010
(51) Int. Cl.: H04N 5/91, H04N 5/76, H04N 5/765, H04N 7/173

(54) **PLAYBACK APPARATUS AND PROGRAM CONTENT TRANSMISSION-RECEPTION SYSTEM**

(30) Priority: 17.04.2009 JP 2009101313
(71) Applicant: Sony Corporation, Tokyo 108-0075 (JP)
(72) Inventor: TSUKAGOSHI, Ikuo, Tokyo 108-0075 (JP); INOUE, Hajime, Tokyo 108-0075 (JP)
(74) Representative: Thévenet, Jean-Bruno
(86) International application number: PCT/JP2010/056798
(87) International publication number: WO 2010/119933

(57) **Abstract**

Program content is easily selected on a playback apparatus having a plurality of program content recording locations.

A video recording management server (11) manages program IDs, the video recording condition of program content on a television apparatus (10), and recording location information indicating on which server each program content is recorded, in association with each other as program management information. The television apparatus (10) displays an electronic program guide (100) in which past and future programs are displayed integrally, and displays a video recording complete mark (RM) for programs previously recorded on a user content server (13). On the other hand, when an instruction to play back program content is made in the electronic program guide (100), the television apparatus (10) receives the program content from a server designated from the video recording management server (11) to perform streaming playback. Thus, the television apparatus (100) can perform video recording and playback of program content desired by the user by means of the electronic program guide (100), without making the user specify a program content recording location.

## Description

### Technical Field

The present invention relates to a playback apparatus and a program content transmitting and receiving system, which are suitable for application to, for example, a television apparatus that has a plurality of program content storage locations and can display an electronic program guide.

### Background Art

In the related art, television apparatuses configured to receive a television broadcast, and video record program content included in the television broadcast are in widespread use.

Among such television apparatuses, there has been proposed one in which a video recordings list screen listing the title of each video-recorded program content is displayed upon an operation by the user, and the program content to play back is selected and played back from the video recordings list screen (see, for example, PTL 1)

### Citation List

PTL 1: Japanese Unexamined Patent Application Publication No. 2008-177682 (Fig. 8)

### Summary of Invention

Incidentally, some television apparatuses are configured to not only play back program content recorded in the television apparatuses, but also receive and play back program content recorded on predetermined servers that exist on the Internet.

In the case of such televisions having a plurality of program content acquisition locations, there is a problem in that when the user is to play back desired program content, a cumbersome operation is required such that the user first selects the recording location of the desired program content and then selects the program.

The present invention has been made in view of the above-mentioned point, and proposes a playback apparatus and a program content transmitting and receiving system which make it possible to easily select program content, on a playback apparatus having a plurality of program content recording locations.

To solve the above problem, a playback apparatus according to the present invention includes a receiving section that receives program information from an outside, a program information storage section in which the program information received by the receiving section is recorded and accumulated, a program guide data generating section that generates program guide data on a basis of past program information accumulated in the program information storage section, the program guide data serving as an electronic program guide in which the past program information is arranged in time series, a display section that displays the electronic program guide on a basis of the program guide data, a selecting section that causes program content to play back to be selected via the program information, from the electronic program guide displayed on the display section, a communication section that communicates data via a network with an external device having the program content, a program content storage section to which the program content is recorded, the program content storage section being provided separately from the external device, a recording management section that manages a recording location of the program content, and in response to an acquisition request for the program content, supplies recording location information indicating the program content storage section if the program content is stored in the program content storage section, and supplies recording location information indicating the external device if the program content is not stored in the program content storage section, and a playback control section that sends, when program content to play back is selected from the electronic program guide, an acquisition request for the program content to the recording management section, acquires recording location information for the program content to play back from the recording management section, and acquires and plays back the program content from the program content storage section or the external device indicated by the recording location information.

Thus, in the playback apparatus according to the present invention, it is possible to perform video recording and playback of program content desired by the user by means of the electronic program guide, without making the user specify a program content recording location.

Also, a program content transmitting and receiving system according to the present invention includes a broadcast station server, and a playback apparatus, the broadcast station server including a storage section that stores program content that has been broadcast, and a broadcast station control section that communicates data via a network with the playback apparatus that plays back program content, and transmits the program content to the playback apparatus, the playback apparatus including a receiving section that receives program information from an outside, a program information storage section in which the program information received by the receiving section is recorded and accumulated, a program guide data generating section that generates program guide data on a basis of past program information accumulated in the program information storage section, the program guide data serving as an electronic program guide in which the past program information is arranged in time series, a display section that displays the electronic program guide on a basis of the program guide data, a selecting section that causes program content to play back to be selected via the program information, from the electronic program guide displayed on the display section, a communication section that communicates data via a network with the broadcast station server having the program content, a program content storage section to which the program content is recorded, the program content storage section being provided separately from the broadcast station server, a recording management section that manages a recording location of the program content, and in response to an acquisition request for the program content, supplies recording location information indicating the program content storage section if the program content is stored in the program content storage section, and supplies recording location information indicating the broadcast station server if the program content is not stored in the program content storage section, and a playback control section that sends, when program content to play back is selected from the electronic program guide, an acquisition request for the program content to the recording management section, acquires recording location information for the program content to play back from the recording management section, and acquires and plays back the program content from the program content storage section or the broadcast station server indicated by the recording location information.

Thus, in the program content transmitting and receiving system according to the present invention, it is possible to perform video recording and playback of program content desired by the user by means of the electronic program guide, without making the user specify a program content recording location.

According to the present invention, the playback apparatus and the program content transmitting and receiving system make it possible to perform video recording and playback of program content desired by the user by means of the electronic program guide, without making the user specify a program content recording location. In this way, the present invention can realize a playback apparatus and a program content transmitting and receiving system which make it possible to easily select program content, on a playback apparatus having a plurality of program content recording locations.

### Brief Description of Drawings

[Fig. 1] Fig. 1 is a schematic diagram showing the overall configuration of a program content transmitting and receiving system.
[Fig. 2] Fig. 2 is a block diagram showing the overall configuration of a television apparatus.
[Fig. 3] Fig. 3 is a schematic diagram showing an electronic program guide.
[Fig. 4] Fig. 4 is a sequence chart showing a program recording procedure by a program content transmitting and receiving system.
[Fig. 5] Fig. 5 is a flowchart showing a program playback procedure by a television apparatus.
[Fig. 6] Fig. 6 is a flowchart showing an URL transmitting procedure by a video recording management server.
[Fig. 7] Fig. 7 is a sequence chart showing a program playback procedure by a program content transmitting and receiving system.

### Description of Embodiments

Hereinbelow, modes for carrying out the present invention (hereinafter referred to as embodiments) will be described. It should be noted that the description will be given in the following order.

### 1. Embodiment

### 2. Other embodiments

### <1. Embodiment>

### [1-1. Overall Configuration of Program Content Transmitting and Receiving System]

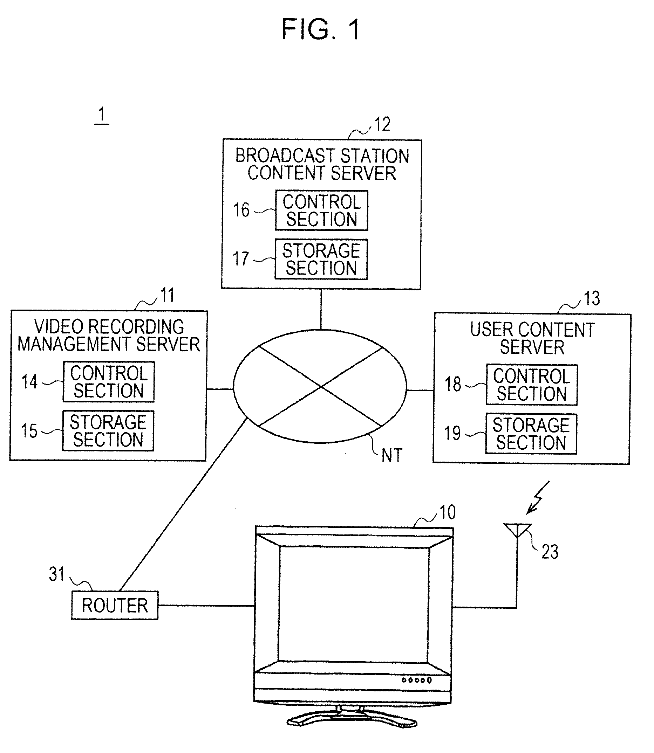

As shown in Fig. 1, a program content transmitting and receiving system 1 as an embodiment of the present invention mainly includes a television apparatus 10, a video recording management server 11, a broadcast station content server 12, and a user content server 13.

The video recording management server 11, the broadcast station content server 12, and the user content server 13 are each assigned its own unique URL (Uniform Resource Locator), and configured to be accessible from an externally provided device via the Internet NT.

A control section 14 of the video recording management server 11 causes a storage section 15 to store, for each program content, program management information in which a program ID, recording location information, and a video recording condition are associated with each other, thereby managing the program management information. The program ID is an ID uniquely assigned to every program content.

The recording location information includes the URL of the broadcast station content server 12 or the user content server 13, and indicates on which of the servers program content corresponding to the program ID is recorded.

The video recording condition indicates whether a control section 20 of the television apparatus 10 is on standby for video recording of program content to the user content server 13, video recording is in progress, or video recording is complete. When video recording is in progress, the video recording condition also includes the completed video recording time with respect to the total video recording time of the program content to be video recorded.

In response to an access from the television apparatus 10, the video recording management server 11 returns the video recording condition, and the URL of the broadcast station content server 12 or the user content server 13 as the recording location information.

The user content server 13 is provided as an external storage medium for the television apparatus 10, and under control of a control section 18, receives program content from the television apparatus 10 via the Internet NT, and records the program content to a storage section 19.

The television apparatus 10 is connected to the Internet NT via a router 31, and retains the URL of the video recording management server 11 in the inside.

Also, since the television apparatus 10 uses the externally provided user content server 13 as the storage medium for program content, the television apparatus 10 does not have a large capacity storage section for recording program content in the inside.

Further, by accessing the video recording management server 11, without retaining the URLs of the broadcast station content server 12 and the user content server 13, and without managing the video recording condition of program content or the like, either, the television apparatus 10 acquires the URLs and the video recording condition or the like.

Here, when an operation to video record a program is made by the user to record program content, the television apparatus 10 receives a television broadcast signal from a broadcast station (not shown) by an antenna 23. Subsequently, the television apparatus 10 applies various kinds of signal processing or the like to the television broadcast signal, accesses the video recording management server 11 to acquire the URL of the user content server 13, and transmits and records the resulting data to the user content server 13 as an external storage medium.

The broadcast station content server 12 has, in a storage section 17, all of program content on all broadcast channels which has been broadcast by television in the past. Further, when, for example, the user wants to view a program the user forgot to video record, under control by a control section 16, the broadcast station content server 12 distributes the program content by streaming in response to a request from the television apparatus 10.

On the other hand, when playing back program content, the television apparatus 10 accesses the video recording management server 11, and acquires the URL of the server on which desired program content is recorded. Further, the television apparatus 10 receives the program content desired by the user by accessing the server (the broadcast station content server 12 or the user content server 13) having the server URL.

Incidentally, in the program content transmitting and receiving system 1, when program content previously recorded to the user content server 13 by the user is later received and played back on the television apparatus 10 by the user, no program content viewing fee is charged to the user.

However, for example, when a program the user forgot to video record is later received by the user from the broadcast station content server 12, the user needs to pay a program content viewing fee.

In this way, as a client to various servers, the television apparatus 10 is configured to transmit and receive information and program content with the various servers via the Internet NT.

### [1-2. Configuration of Television Apparatus]

### [1-2-1. Transmission of Program Content to Server]

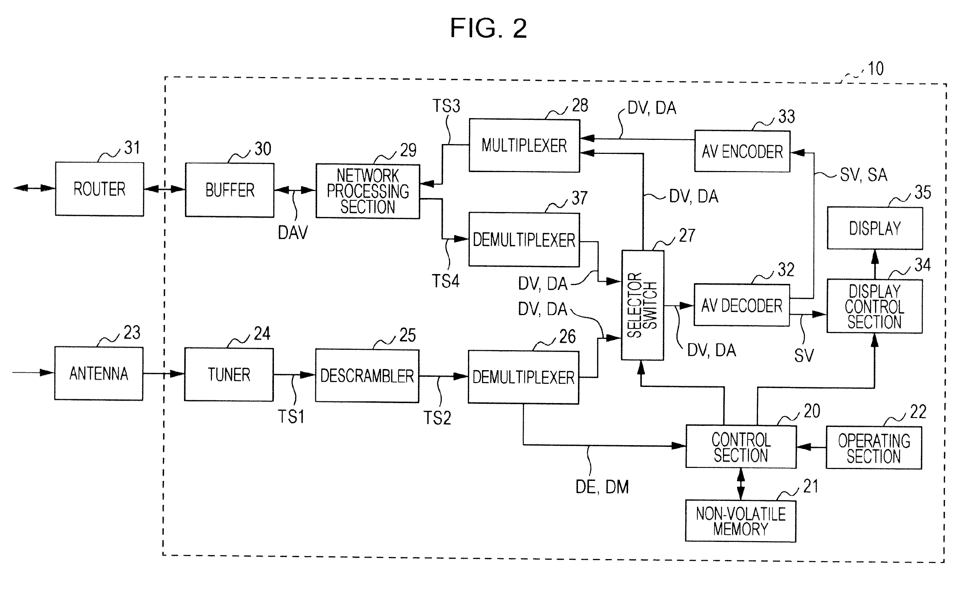

As shown in Fig. 2, the television apparatus 10 has the control section 20 formed by a CPU (Central Processing Unit). The control section 20 is configured to execute various kinds of processing in accordance with various application programs such as a basic program and a program content transmitting and receiving program stored in a non-volatile memory 21.

The television apparatus 10 accepts an operation made by the user via an operating section 22. When an operation is made by the user, the operating section 22 supplies a predetermined operation signal to the control section 20. At this time, the control section 20 is configured to execute various kinds of processing in response to the operation signal.

Hereinafter, a description will be given of the case in which the television apparatus 10 receives a television broadcast signal via the antenna 23, and transmits and records program content based on the television broadcast signal to the user content server 13 (Fig. 1).

When instructed to video record a program by a user operation, on the basis of control by the control section 20, the television apparatus 10 supplies a digital television broadcast signal received via the antenna 23 from the broadcast station (not shown) of the television broadcast, to a tuner 24.

In the digital television broadcast signal, broadcast signals on all broadcast channels are time division multiplexed, and transmitted as a single multiplexed television broadcast signal. Hereinafter, this digital television broadcast signal will be referred to as television broadcast signal.

On the basis of control by the control section 20, the tuner 24 extracts a broadcast signal for a broadcast channel specified by a user operation, from the time division multiplexed television broadcast signal, further applies a demodulation process to the extracted broadcast channel signal to generate a transport stream TS1, and supplies the transport stream TS1 to a descrambler 25.

The descrambler 25 reads scramble key data for descrambling from an IC (Integrated Circuit) card inserted in a card slot (not shown) provided in the television apparatus 10, and applies descrambling to the transport stream TS1. The descrambler 25 thus generates a decoded transport stream TS2, and supplies the transport stream TS2 to a demultiplexer 26.

The demultiplexer 26 separates video data DV, audio data DA, metadata DM, and EPG data DE from the transport stream TS2. Subsequently, the demultiplexer 26 supplies the video data DV and the audio data DA to a selector switch 27, and supplies the metadata DM and the EPG data DE to the control section 20 as program information.

The EPG data DE includes, for example, as information about each program planned to be broadcast, a program ID, a broadcast station name, a channel number, a broadcast date and time (including the broadcast start time instant and the broadcast end time instant), a broadcasting time (the broadcasting time from the broadcast start time instant to the broadcast end time instant), a genre, a program overview, program details, cast, and so on.

Also, the metadata DM includes a logo image of a broadcast station, a thumbnail image of a program, bit rate information, resolution information, and the like related to each program planned to be broadcast.

The bit rate information is information about the bit rate indicating the required bandwidth after video data DV and audio data DA are compressed. The resolution information indicates information about the resolution of video based on video data DA. Examples of the resolution include HD (High Definition) and SD (Standard Definition).

In response to this, the control section 20 records and accumulates the acquired EPG data DE and metadata DM into the non-volatile memory 21. Also, the control section 20 is configured to save the EPG data DE and the metadata DM even after the end of broadcast of a program.

On the basis of control by the control section 20, the selector switch 27 switches the transmission location of the supplied data to a multiplexer 28, and supplies the video data DV and the audio data DA supplied from the demultiplexer 26 to the multiplexer 28.

The multiplexer 28 time division multiplexes the video data DV and the audio data DA, thereby converting these pieces of data into a transport stream TS3 in a predetermined multiplexed container format, and supplies the transport stream TS3 to a network processing section 29.

The network processing section 29 converts the transport stream TS3 into AV data DAV by applying protocol processing such as TCP/IP, and supplies the AV data DAV to a buffer 30. The AV data DAV supplied to the buffer 30 is transmitted via the router 31 to the user content server 13 connected to the Internet NT.

Incidentally, in the case where, due to a limit on the bandwidth when transmitting to the Internet NT, or the like, it is necessary to reduce the bandwidth of the AV data DAV transmitted to the user content server 13, the selector switch 27 switches the transmission location of the data supplied from the demultiplexer 26 to an AV decoder 32 on the basis of control by the control section 20.

Subsequently, the selector switch 27 supplies the video data DV and the audio data DA supplied from the demultiplexer 26 to the AV decoder 32.

The AV decoder 32 generates a video signal SV and an audio signal SA by decoding the video data DV and the audio data DA, and supplies the video signal SV and the audio signal SA to an AV encoder 33.

The AV encoder 33 applies compression encoding while making the compression efficiency of the video signal SV and the audio signal SA higher, or applies compression encoding while limiting the bit rate, thereby generating video data DV and audio data DA, and supplies the video data DV and the audio data DA to the multiplexer 28.

The multiplexer 28 generates a transport stream TS3 in a predetermined multiplexed container format from the video data DV and the audio data DA, and supplies the transport stream TS3 to the network processing section 29.

The network processing section 29 converts the transport stream TS3 into AV data DAV by applying protocol processing such as TCP/IP, and transmits the AV data DAV to the user content server 13 (Fig. 1) connected to the Internet NT, via the buffer 30 and the router 31.

In this way, when video recording program content, the television apparatus 10 receives a television broadcast signal via the antenna 23. Subsequently, the television apparatus 10 records and accumulates EPG data DE and metadata DM included in the television broadcast signal into the non-volatile memory 21. At the same time, the television apparatus 10 is configured to transmit and record program content based on the television broadcast signal to the user content server 13.

### [1-2-2. Playback of Program Content]

On the other hand, when instructed to play back program content by a user operation, the television apparatus 10 acquires program content recorded on the external broadcast station content server 12 or user content server 13, and performs various kinds of processing before displaying the video of the program content on a display 35.

The television apparatus 10 is configured to receive and acquire program content from the broadcast station content server 12 or the user content server 13. Hereinafter, a description will be given of a case in which program content is received from the user content server 13 and played back by streaming.

On the basis of control by the control section 20, the television apparatus 10 supplies the AV data DAV of program content, which is received via the router 31 from the user content server 13 connected to the Internet NT, to the buffer 30.

The buffer 30 supplies the supplied AV data DAV to the network processing section 29. The network processing section 29 converts the AV data DAV into a transport stream TS4, and supplies the transport stream TS4 to a demultiplexer 37.

The demultiplexer 37 separates video data DV and audio data DA from the transport stream TS4, and supplies those pieces of data to the selector switch 27.

On the basis of control by the control section 20, the selector switch 27 switches the transmission location of the supplied data to the AV decoder 32, and supplies the video data DV and the audio data DA supplied from the demultiplexer 37 to the AV decoder 32.

The AV decoder 32 generates a video signal SV and an audio signal SA by decoding the video data DV and the audio data DA, and supplies the video signal SV and the audio signal SA to a display control section 34 and a speaker (not shown), respectively.

The display control section 34 generates a screen signal on the basis of the supplied video signal SV and outputs the screen signal to the display 35, thereby displaying program video based on the video signal SV on the display 35.

In the foregoing, a description has been given of the case in which the television apparatus 10 receives program content from the user content server 13 and plays back the program content by streaming. On the other hand, in the case of receiving program content from the broadcast station content server 12 as well, the television apparatus 10 performs the processing described above for streaming playback of the program content.

In this connection, when instructed to receive a television broadcast signal by a user operation, on the basis of control by the control section 20, the television apparatus 10 receives the television broadcast signal via the antenna 23, and switches the selector switch 27 to the AV decoder 32 to thereby play back program content based on the television broadcast signal and display the program content on the display 35. At this time as well, the control section 25 records and accumulates the acquired EPG data DE and metadata DM into the non-volatile memory 21.

In this way, the television apparatus 10 is configured to receive the AV data DAV of program content via the router 31 from a predetermined server and display the AV data DAV on the display 35 to thereby perform streaming playback.

### [1-3. Configuration of Electronic Program Guide]

In this connection, when it is instructed by a user operation to display an electronic program guide on the display 35, the control section 20 generates electronic program guide data on the basis of EPG data DE and metadata DM accumulated in the non-volatile memory 21, and supplies the electronic program guide data to the display control section 34.

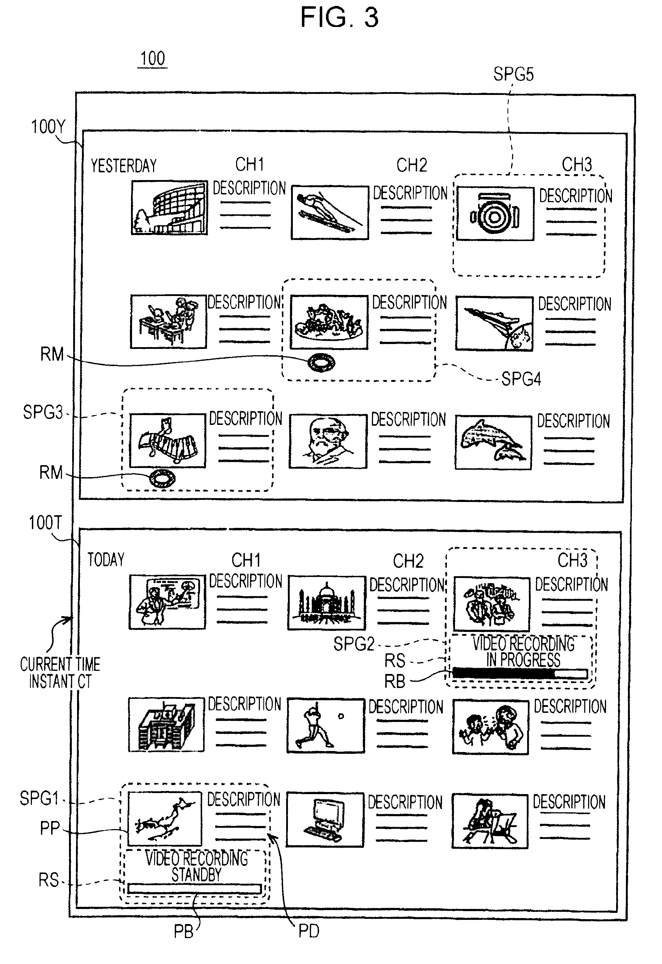

The display control section 34 generates a screen signal on the basis of the supplied electronic program guide data and outputs the screen signal to the display 35, thereby displaying an electronic program guide 100 shown in Fig. 3 on the display 35.

In the electronic program guide 100, program information display fields SPG showing information related to program content are arranged in tabular form, in time series for each broadcast channel. In each of the program information display fields SPG, a logo image or thumbnail image included in the metadata DM is displayed as a program image PP, and a program overview included in the EPG data DE is displayed as a program details description PD.

Here, in the electronic program guide 100, an electronic program guide 100Y for yesterday included in the past EPG data DE accumulated in the non-volatile memory 21, and an electronic program guide 100T for today included in the latest EPG data DE indicating a future broadcast schedule are combined together and displayed integrally.

In the electronic program guide 100, information related to program content is displayed as program information display fields SPG1 and SPG2, and information is displayed in the same manner for other program content as well. Hereinafter, programs indicated by the program information display fields SPG1 and SPG2 will be referred to as programs PG1 and PG2.

Also, the electronic program guide 100 is configured to not only show a broadcast schedule or the like, but also allow selection of a program to play back and a program to be scheduled for video recording as the electronic program guide 100 is operated by the user.

Here, when a predetermined program information display field SPG is selected from the electronic program guide 100 by a user operation, the control section 20 recognizes that the program PG indicated by this program information display field SPG has been specified. When the predetermined program information display field SPG is selected from the electronic program guide 100 and, further, a scheduled video recording is made, the control section 20 stands by for video recording until the broadcast start time instant of the program scheduled for video recording. In this connection, when making a scheduled video recording, the user can specify the bit rate, resolution, and the like. Those pieces of information are recorded to the non-volatile memory 21 in association with a program ID.

Further, to display the electronic program guide 100, the control section 20 accesses the video recording management server 11, and acquires the video recording condition of program content to be displayed on the electronic program guide 100.

Subsequently, on the basis of the acquired video recording condition, the control section 20 generates electronic program guide data in such a way that a video recording status RS indicating the video recording condition of program content to the user content server 13 is displayed in the program information display field SPG of each of programs scheduled for video recording in the electronic program guide 100. Subsequently, the control section 20 supplies the electronic program guide data to the display control section 34.

The display control section 34 generates a screen signal on the basis of the supplied electronic program guide data and outputs the screen signal to the display 35, thereby displaying the electronic program guide 100 shown in Fig. 3 on the display 35.

Here, letting the current time instant be current time instant CT, the current time instant CT has not yet reached the broadcast start time instant of the program PG1. Therefore, in the video recording status RS displayed below the program image PP and program details description PD of the program information display field SPG1, as a recording standby mark, the letters Video Recording Standby indicating a state in which the start of video recording is being put on standby until the broadcast start time instant, and a video recording status bar RB whose inside is not filled in with black are displayed.

### [1-4. Procedure of Program Content Recording to Server]

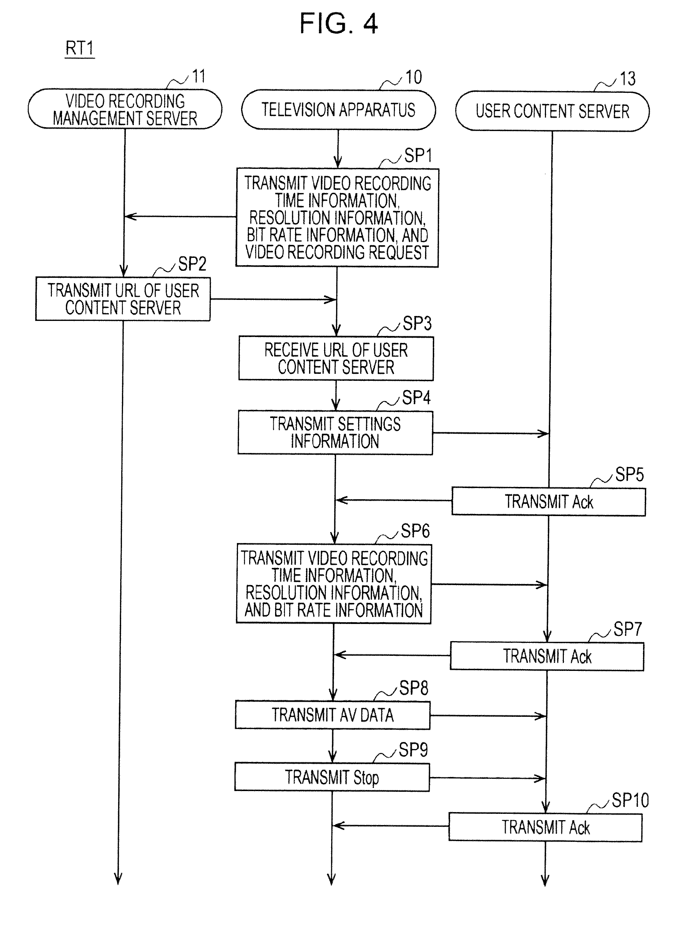

Next, a description will be given of a program recording procedure RT1 when the television apparatus 10 records program content to the user content server 13 in the program content transmitting and receiving system 1, by using the sequence flowchart shown in Fig. 4 with the program PG2 taken as an example.

When the broadcast start time instant of the program PG2 indicated by the program information display field SPG2 (Fig. 3) arrives, the control section 20 of the television apparatus 10 transfers to step SP1 in the program recording procedure RT1.

In step SP1, the control section 20 reads the broadcasting time from the broadcast start time instant to the broadcast end time instant, resolution information, and bit rate information of the program PG2 from the non-volatile memory 21. Subsequently, the control section 20 transmits the broadcasting time as video recording time information, and also the resolution information and the bit rate information to the video recording management server 11. At the same time, the control section 20 transmits a video recording request to the video recording management server 11.

On the other hand, in step SP2, the control section 14 (Fig. 1) of the video recording management server 11 receives the video recording time information, the resolution information, the bit rate information, and the video recording request, reads the URL of the user content server 13 from the storage section 15, and transmits the URL to the television apparatus 10. Subsequently, the control section 14 updates the program recording location of the program PG2 to the user content server 13 in program management information.

In step SP3, the control section 20 of the television apparatus 10 receives the URL of the user content server 13, and transfers to step SP4.

In step SP4, the control section 20 references the received URL of the user content server 13, and transmits settings information for establishing a session with the user content server 13 to the user content server 13.

In step SP5, the control section 18 (Fig. 1) of the user content server 13 receives the settings information, and transmits an acknowledgment Ack to the television apparatus 10.

In step SP6, the control section 20 of the television apparatus 10 transmits video recording time information, resolution information, and bit rate information to the user content server 13, as information about the program content to record.

In step SP7, the control section 18 of the user content server 13 receives the video recording time information, the resolution information, and the bit rate information, and transmits an acknowledgement Ack to the television apparatus 10.

In step SP8, the control section 20 of the television apparatus 10 transmits the AV data DAV of the program to record to the user content server 13. In response to this, the control section 18 of the user content server 13 receives the AV data DAV and records the AV data DAV to the storage section 19.

Here, the control section 14 of the video recording management server 11 constantly monitors the video recording condition of program content from the television apparatus 10 to the user content server 13. The television apparatus 11 receives the video recording condition of program content from the video recording management server 11 whenever necessary (not shown).

Upon transmitting all of the AV data DAV of the program content to be video recorded to the user content server 13, in step SP9, the control section 20 transmits a transmit end notification STOP to the user content server 13.

In step SP10, the control section 18 of the user content server 13 receives the transmit end notification STOP and transmits an acknowledgment Ack to the television apparatus 10, thereby completing reception of the AV data DAV of program content.

In this way, in the program content transmitting and receiving system 1, the control section 14 of the video recording management server 11 is configured to transmit the URL of the user content server 13 on which to record program content, to the television apparatus 10.

In response to this, the control section 20 of the television apparatus 10 is configured to access the user content server 13 specified by the above-mentioned URL, and transmit the AV data DAV of program content, thereby recording the program content to the user content server 13.

Incidentally, as described above, the control section 14 of the video recording management server 11 constantly monitors the video recording condition of program content from the television apparatus 10 to the user content server 13.

When it is instructed by a user operation to display the electronic program guide 100, the control section 20 of the television apparatus 10 accesses the video recording management server 11, and acquires the video recording condition of the program content to be displayed in the electronic program guide 100.

In step SP8 described above, the control section 20 presents the user with the ratio of a completed video recording time with respect to the total video recording time of the program PG2, by varying the display of the video recording status RS in the program information display field SPG2 of the electronic program guide 100 (Fig. 3).

Specifically, the control section 20 displays the letters Video Recording in Progress as a recording-in-progress mark, and updates the display of the video recording status RS in the program information display field SPG2 of the program PG2 in such a way that as the currently recorded ratio of the video recording time of the program PG2 increases, the area inside the video recording status bar RB which is filled in with black is extended to the right side.

Also, programs PG3 and PG4 indicated by program information display fields SPG3 and SPG4 of the electronic program guide 100 (Fig. 3) are programs that were broadcast yesterday. In the control section 20, by making a scheduled video recording by a user operation in advance, and executing the program recording procedure RT1 described above, recording of the programs PG3 and PG4 to the user content server 13 have been completed.

For such programs whose video recording has been completed, as shown in Fig. 3, the control section 20 displays a video recording complete mark RM as a recording complete mark below the program image PP and program details description PD of each of the program information display fields SPG3 and SPG4.

### [1-5. Procedure of Program Content Playback from Server]

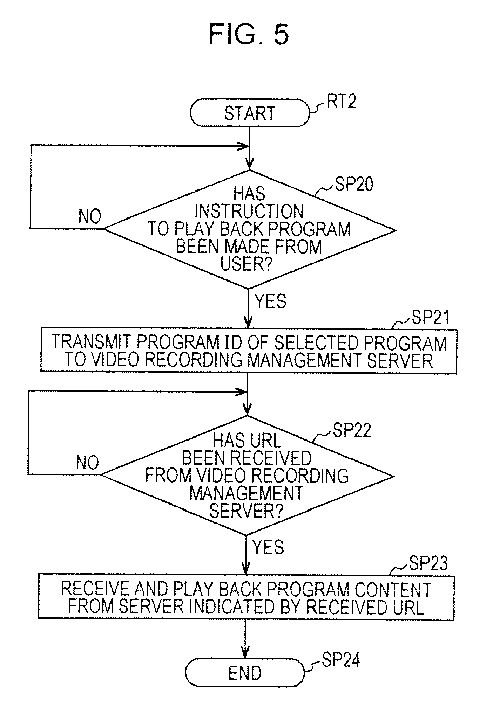

Next, a description will be given of a program playback procedure RT2 when the television apparatus 10 receives and plays back program content from a predetermined server, by using the flowchart shown in Fig. 5.

In step SP20, the control section 20 of the television apparatus 10 determines whether or not an instruction to play back a program PG has been made after a predetermined program information display field SPG is selected from the electronic program guide 100 by a user operation. If a negative result is obtained here, the control section 20 returns to step SP20, and waits for an instruction to play back a program PG from the user again.

If an affirmative result is obtained in step SP20, the control section 20 transfers to the next step SP21, reads from the non-volatile memory 21 a program ID assigned to the program specified by the user and transmits the program ID to the video recording management server 11, and transfers to step SP22.

The control section 14 of the video recording management server 11 has, in association with each program ID, the URL of a server on which program content corresponding to the program ID is stored, as recording location information. In step SP22, the control section 20 determines whether or not the URL of a server on which the program content of the program corresponding to the program ID transmitted in step SP22 is recorded has been received from the video recording management server 11. If a negative result is obtained here, the control section 20 returns to step SP22, and waits for the URL to be transmitted from the video recording management server 11 again.

If an affirmative result is obtained in step SP22, the control section 20 transfers to the next step SP23, accesses the server indicated by the URL received in step SP22 (will be described later in detail), and performs streaming playback while receiving the program content. Thereafter, the control section 20 transfers to step SP24, and ends the program playback procedure RT2.

In this way, when playing back a program, the television apparatus 10 is configured to acquire the URL of a server that stores the program content from the video recording management server 11 that manages program content, and receive and play back the program content from the server indicated by the URL.

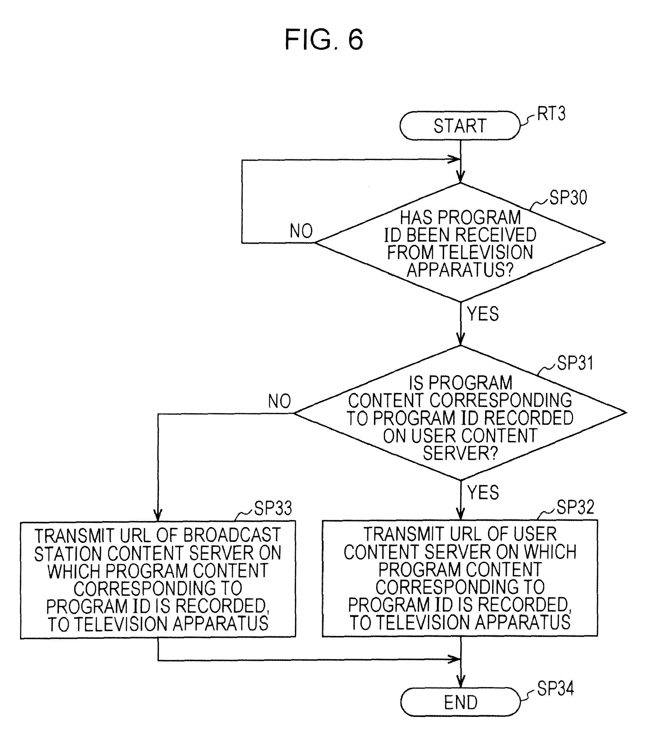

Next, a description will be given of an URL transmitting procedure RT3 when the video recording management server 11 receives a program ID from the television apparatus 10, and transmits to the television apparatus 10 the URL of a server on which program content corresponding to the program ID is recorded, by using the flowchart shown in Fig. 6.

In step SP30, the control section 14 of the video recording management server 11 determines whether or not a program ID has been received from the television apparatus 10. If a negative result is obtained here, the control section 14 returns to step SP30, and waits for transmission of a program ID from the television apparatus 10 again.

If an affirmative result is obtained in step SP30, the control section 14 transfers to the next step SP31, and determines whether or not program content corresponding to the program ID received in step SP30 is recorded on the user content server 13.

At this time, for programs that have already been television broadcast and recorded on the user content server 13, the video recording complete mark RM is displayed as shown in the program information display fields SPG3 and SPG4 of the electronic program guide 100 (Fig. 3).

If an affirmative result is obtained here, the control section 14 transfers to step SP32, transmits to the television apparatus 10 the URL of the user content server 13 on which the program content of a program corresponding to the program ID is recorded, and transfers to step SP34 to end the URL transmitting procedure RT3.

On the other hand, if a negative result is obtained in step SP31, the control section 14 transfers to step SP33, transmits to the television apparatus 10 the URL of the broadcast station content server 12 on which the program content of a program corresponding to the program ID is recorded, and transfers to step SP34 to end the URL transmitting procedure RT3.

As described above, in the program content transmitting and receiving system 1, a program content viewing fee is charged when receiving program content from the broadcast station content server 12.

At this time, in the URL transmitting procedure RT3, the control section 14 determines whether or not program content desired by the user is recorded on the user content server 13.

Thus, the control section 14 can preferentially specify program content stored on the user content server 13 for which no program content viewing fee will be charged even when the user receives the program content.

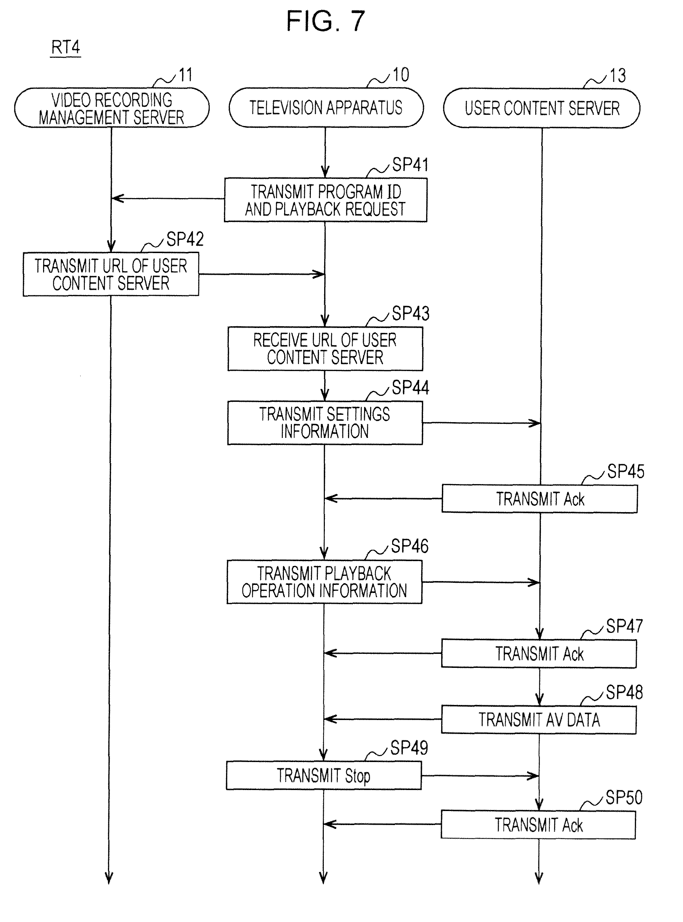

Next, a description will be given of a program playback procedure RT4 when the television apparatus 10 receives program content from a server specified by the video recording management server 11 in the program content transmitting and receiving system 1, by using the sequence chart shown in Fig. 7.

In this connection, the television apparatus 10 is configured to receive program content from the broadcast station content server 12 or the user content server 13. Hereinafter, the case of receiving program content from the user content server 13 will be described.

The program playback procedure RT4 illustrates in detail the process sequence between the television apparatus 10 and each of the video recording management server 11 and the user content server 13, at the time of executing the program playback procedure RT2 by the television apparatus 10 shown in Fig. 5.

When, for example, the program PG3 indicated by the program information display field SPG3 is selected and then its playback is instructed by the user in the electronic program guide 100 (Fig. 3), the control section 20 of the television apparatus 10 transfers to step SP41 in the program playback procedure RT4.

In step SP41, the control section 20 reads the program ID of the program PG3 from the non-volatile memory 21 and transmits the program ID to the video recording management server 11. At the same time, the control section 20 transmits a playback request to the video recording management server 11.

On the other hand, in step SP42, the control section 14 (Fig. 1) of the video recording management server 11 receives the program ID and the playback request, reads the URL of the user content server 13 from the storage section 15, and transmits the URL to the television apparatus 10.

In step SP43, the control section 20 of the television apparatus 10 receives the URL of the user content server 13, and transfers to step SP44.

In step SP44, the control section 20 references the received URL of the user content server 13, and transmits settings information for establishing a session with the user content server 13 to the user content server 13.

In step SP45, the control section 18 (Fig. 1) of the user content server 13 receives the settings information, and transmits an acknowledgment Ack to the television apparatus 10.

In step SP46, the control section 20 of the television apparatus 10 transmits playback operation information indicating an operation such as playback, pause, fast forward, and rewind of program content to the user content server 13.

In step SP47, the control section 18 of the user content server 13 receives the playback operation information, and transmits an acknowledgment Ack to the television apparatus 10.

In step SP48, the control section 18 starts transmission of the AV data DAV of program content to the television apparatus 10. Here, for example, when fast forward has been instructed by the above-mentioned playback operation information, the control section 18 transmits AV data DAV that is being fast forwarded to the television apparatus 10.

When playback of program content is stopped upon an instruction by a user operation, or when all of the AV data DAV of the program content to play back has been received, in step SP49, the control section 20 of the television apparatus 10 transmits a receive end notification STOP to the user content server 13.

In step SP50, the control section 18 of the user content server 13 receives the receive end notification STOP and transmits an acknowledgment Ack to the television apparatus 10, thereby completing transmission of the AV data DAV of program content.

In this way, in the program content transmitting and receiving system 1, the control section 14 of the video recording management server 11 transmits to the television apparatus 10 the URL of the user content server 13 on which program content selected for playback by a user operation is recorded.

In response to this, the control section 20 of the television apparatus 10 is configured to access the user content server 13 specified by the above-mentioned URL and receive AV data DAV, thereby performing streaming playback of program content based on the AV data DAV.

On the other hand, for example, in a program information display field SPG5 of the electronic program guide 100 (Fig. 3), the video recording complete mark RM is not displayed, and program content desired by the user is not recorded on the user content server 13.

Here, when a program PG5 indicated by the program information display field SPG5 is selected and then its playback is instructed by a user operation, the television apparatus 10 receives the program content from the broadcast station content server 12. At this time, the program content transmitting and receiving system 1 executes processing similar to the program playback procedure RT4 by the television apparatus 10, the video recording management server 11, and the broadcast station content server 12.

In step SP42, the video recording management server 11 transmits the URL of the broadcast station content server 12 having the program content desired by the user to the television apparatus 10. Also, the video recording management server 11 executes a process sequence in the same manner as the user content server 13.

As a result, the control section 20 of the television apparatus 10 is configured to access the broadcast station content server 12 and receive AV data DAV, thereby performing streaming playback of the program content based on the AV data DAV.

### [1-6. Operation and Effect]

According to the configuration mentioned above, the television apparatus 10 is configured to receive a television broadcast signal via the antenna 23, and record program content to the user content server 13 that is externally provided.

Therefore, in the television apparatus 10, a large-capacity storage section to be internally provided such as a hard disk can be omitted, thereby enabling a reduction in the cost of the television apparatus 10. Also, although the storage capacity of a hard disk or the like that can be installed in the television apparatus 10 is limited, if, for example, a plurality of user content servers 13 are made available, it is possible for the television apparatus 10 to use a very large capacity storage section without having such a storage section internally installed.

Also, the television apparatus 10 is configured to display the electronic program guide 100 on the display 35, and when video recording of a desired program is instructed by the user in the electronic program guide 100, record the program to the user content server 13 indicated by an URL acquired from the video recording management server 11.

Further, when playback of a desired program is instructed by the user in the electronic program guide 100, the television apparatus 10 is configured to receive the program from a server indicated by an URL acquired from the video recording management server 11.

Therefore, the user can instruct a record/playback process by simply selecting a desired program in the electronic program guide 100.

Further, the television apparatus 10 is configured to record and accumulate EPG data DE and metadata DM included in a television broadcast signal into the non-volatile memory 21, and save those pieces of data even after the end of broadcast of a program.

Therefore, the television apparatus 10 can display not only a future electronic program guide but also a past electronic program guide, and can present the user with an indication of whether or not a program has been video recorded in the past.

Further, the television apparatus 10 allows the user to select and play back desired program content in the electronic program guide 100, without going through the procedure of selecting the recording location of previously video-recorded program content and then selecting the previously video-recorded program content.

Therefore, the user can select all of program content that has been broadcast from the electronic program guide 100, irrespective of whether the corresponding program content is previously video-recorded content or not. Also, for example, even in the case of program content the user forgot to video record, since the program content is displayed in the electronic program guide 100, by selecting and instructing playback of the program content, the program content received from a server can be viewed.

Also, the video recording management server 11 is configured to manage, in association with the program ID of each program content, recording location information indicating on which server each program content is stored, and a video recording condition as the recording condition of program content on the television apparatus 10, as program management information. Further, the video recording management server 11 is configured to return the URL of a predetermined server, video recording condition, and the like in response to an access from the television apparatus 10.

Therefore, the television apparatus 10 does not need to manage the recording location and video recording condition of program content but can acquire those pieces of information by simply accessing the video recording management server 11 when those pieces of information become necessary.

Thus, the user does not need to remember the recording location of desired program content, nor does the user need to do a search even if the user no longer knows the recording location.

Further, the television apparatus 10 is configured to display the electronic program guide 100 in substantially the same manner as so-called TV listings, so that the user can instruct a record/playback process by means of the electronic program guide 100.

Conventionally, the user interface used in a television apparatus when selecting program content differs for each manufacturer that designed the television apparatus or each model, causing the user the trouble of learning how to operate the user interface.

In contrast, according to the present invention, by means of the electronic program guide 100 having substantially the same display form as TV listings, the user can make an operation to select a desired program as if looking at the familiar TV listings, irrespective of the manufacturer that designed the television apparatus 10.

Also, when the television apparatus 10 plays back program content, the video recording management server 11 is configured to determine the recording location of desired program content, and preferentially specify the user content server 13.

Thus, even when the same program content is recorded on the broadcast station content server 12 and the user content server 13, the television apparatus 10 can receive the program content from the user content server 13 for which no program content viewing fee needs to be paid.

Further, the television apparatus 10 is configured to display the video recording complete mark RM in the electronic program guide 100 for programs previously recorded on the user content server 13, and not to display the video recording complete mark RM for programs that have not been recorded.

Thus, on the basis of the presence/absence of display of the video recording complete mark RM, the television apparatus 10 allows the user who is looking at the electronic program guide 100 to preferentially select program content that is free of charge, or to decide whether or not to view program content even if the user is charged for the program content.

Further, the television apparatus 10 is configured to display the video recording status RS indicating the video recording condition of program content to the user content server 13, in the program information display field SPG of each of programs scheduled for video recording in the electronic program guide 100.

Thus, the television apparatus 10 enables the user to recognize the video recording conditions of a plurality of programs at a glance by means of the electronic program guide 100.

According to the configuration mentioned above, the video recording management server 11 manages program IDs, the video recording condition of program content on the television apparatus 10, and recording location information indicating on which server (the broadcast station content server 12 or the user content server 13) each program content is recorded, in association with each other as program management information. The television apparatus 10 displays the electronic program guide 100 in which past and future programs are displayed integrally, and displays the video recording complete mark RM for programs previously recorded on the user content server 13. On the other hand, when an instruction to play back program content is made in the electronic program guide 100, the television apparatus 10 receives from the video recording management server 11 the URL of a server that has the program content to play back, and receives the program content from the server indicated by the URL to perform streaming playback.

Thus, the television apparatus 10 can perform video recording and playback of program content desired by the user by means of the electronic program guide 100, without making the user specify a program content recording location.

### <2. Other Embodiments>

It should be noted that the embodiment described above is directed to the case in which when a scheduled video recording time instant arrives, the television apparatus 10 transmits and records program content to the user content server 13, and also when an instruction to play back program content is made by a user operation, the television apparatus 10 receives and plays back the program content from a predetermined server.

The present invention is not limited to this. The television apparatus 10 may be configured to transmit and record program content to the user content server 13 while receiving a television broadcast signal and letting the user view the television broadcast signal, or while receiving program content from a predetermined server and letting the user view the program content.

In this case, if the television apparatus 10 is configured to constantly transmit and record program content to the user content server 13 even while letting the user view a program, all of program content on a predetermined broadcast channel can be recorded to the user content server 13.

Further, in this case, if the television apparatus 10 has a plurality of tuners, all of program content on a plurality of broadcast channels can be recorded to the user content server 13.

Also, the embodiment described above is directed to the case in which, without changing the bit rate, resolution, or the like of a received television broadcast signal, the television apparatus 10 transmits and records program content based on the television broadcast signal to the user content server 13 (Fig. 1).

The present invention is not limited to this. The television apparatus 10 may change the bit rate, resolution, or the like of a television broadcast signal, and record the resulting television broadcast signal to the user content server 13. In short, it suffices for the television apparatus 10 to convert a television broadcast signal into a desired format to be later viewed by the user, and record the television broadcast signal to the user content server 13.

Also, the embodiment described above is directed to the case in which the video recording management server 11 manages the video recording condition of program content on the television apparatus 10.

The present invention is not limited to this. The control section 20 of the television apparatus 10 may be configured to manage the video recording condition of program content or the like.

Also, the embodiment described above is directed to the case in which the television apparatus 10 transmits and records program content to the user content server 13 on the Internet NT, without having an internal storage section such as a hard disk.

The present invention is not limited to this. The television apparatus 10 may be configured to be installed with a storage section such as a hard disk, and record program content to the storage section. In this case, the control section 20 of the television apparatus 10 may manage the video recording condition of program content or the like.

Further, the embodiment described above is directed to the case in which the television apparatus 10 receives a television broadcast signal via the antenna 23, and transmits and records the AV data DAV of program content to the user content server 13.

The present invention is not limited to this. The television apparatus 10 may receive an Internet broadcast signal via a router from a broadcast distribution server connected to the Internet which stores the same program content as program content based on a television broadcast signal. Further, in this case, the television apparatus 10 may be configured such that program content included in the Internet broadcast signal is transmitted and recorded to the user content server 13 via the Internet NT from the broadcast distribution server without going through the television apparatus 10.

Further, the embodiment described above is directed to the case in which the television apparatus 10 receives a television broadcast signal in digital broadcast.

The present invention is not limited to this, and an analog television broadcast signal may be received. In analog television broadcast, in a broadcast signal for a predetermined broadcast channel of an analog television broadcast signal, pieces of EPG data for all broadcast channels are collectively included and transmitted regularly. In this case, the television apparatus may extract the pieces of EPG data for all the broadcast channels by means of a tuner that is set to select this broadcast channel.

Further, the embodiment described above is directed to the case in which a single broadcast station content server 12 and a single user content server 13 are provided on the Internet NT.

The present invention is not limited to this. A plurality of broadcast stations may each be independently provided with a broadcast station content server connected to the Internet NT. Also, there may be provided a plurality of user content servers connected to the Internet NT. In that case as well, the video recording management server 11 may manage the URLs of those servers.

In this case, upon receiving a video recording request from the television apparatus 10, the video recording management server 11 decides on which of the plurality of user content servers program content is to be recorded, on the basis of video recording time information, resolution information, and bit rate information.

For example, the user content server on which to record program content is decided on the basis of whether or not the program content can be recorded relative to the remaining recording capacity of the storage section of the user content server, or the state of the network (traffic or the like), and the URL indicating the user content server is transmitted to the television apparatus 10.

Even in the case where a plurality of user content servers are provided in this way, the user does not need to decide on which user content server program content is to be stored.

Further, the embodiment described above is directed to the case in which the television apparatus 10 constantly displays the video recording status RS in the electronic program guide 100.

The present invention is not limited to this. The television apparatus 10 may display the video recording status RS when, for example, a predetermined program is selected (focused on) by a user operation, only in the program information display field SPG of the selected program.

Further, the embodiment described above is directed to the case in which in the electronic program guide 100, the television apparatus 10 simultaneously displays a future electronic program guide and a past electronic program guide on the display 35 in an integral fashion.

The present invention is not limited to this. For example, the television apparatus 10 may first display a future electronic program guide when it is instructed by a user operation to display the electronic program guide 100, and display a past electronic program guide when a scroll operation or the like is made on the electronic program guide by the user. Also, while in Fig. 3 the television apparatus 10 displays only yesterday's programs in the past electronic program guide 100Y, the television apparatus 10 may be configured to display programs farther back in the past. Also, the television apparatus 10 may be configured to display not only the electronic program guide 100T for today as a future electronic program guide but also the electronic program guide for tomorrow onward.

Further, the embodiment described above is directed to the case in which the television apparatus 10 as a playback apparatus includes the antenna 23 serving as a receiving section, the non-volatile memory 21 serving as a program information storage section, the control section 20 serving as a program guide data generating section, the display control section 34 and the display 35 each serving as a display section, the control section 20 and the operating section 22 each serving as a selecting section, the router 31 serving as a communication section, the user content server 13 serving as a program content storage section, the video recording management server 11 serving as a recording management section, and the control section 20 serving as a playback control section.

However, the present invention is not limited to this. The playback apparatus may include a receiving section, a program information storage section, a program guide data generating section, a display section, a selecting section, a communication section, a program content storage section, a recording management section, and a playback control section according to various other circuit configurations.

Further, the embodiment described above is directed to the case in which the program content transmitting and receiving system 1 as a program content transmitting and receiving system includes the storage section 15 serving as a storage section, the control section 14 serving as a broadcast station control section, the antenna 23 serving as a receiving section, the non-volatile memory 21 serving as a program information storage section, the control section 20 serving as a program guide data generating section, the display control section 34 and the display 35 each serving as a display section, the control section 20 and the operating section 22 each serving as a selecting section, the router 31 serving as a communication section, the user content server 13 serving as a program content storage section, the video recording management server 11 serving as a recording management section, and the control section 20 serving as a playback control section.

However, the present invention is not limited to this. The program content transmitting and receiving system may include a storage section, a broadcast station control section, a receiving section, a program information storage section, a program guide data generating section, a display section, a selecting section, a communication section, a program content storage section, a recording management section, and a playback control section according to various other circuit configurations.

### Industrial Applicability

The present invention can be used also for television apparatuses having a plurality of program content recording locations.

### Reference Signs List

- 1: program content transmitting and receiving system
- 10: television apparatus
- 11: video recording management server
- 12: broadcast station content server
- 13: user content server
- 20: control section
- 21: non-volatile memory
- 22: operating section
- 23: antenna
- 24: tuner
- 25: descrambler
- 26: demultiplexer
- 27: selector switch
- 28: multiplexer
- 29: network processing section
- 30: buffer
- 31: router
- 32: AV decoder
- 33: AV encoder
- 34: display control section
- 35: display
- 100: electronic program guide
- SPG: program information display field
- PP: program image
- PD: program details description
- RM: video recording complete mark
- RB: video recording status bar
- RS: video recording status

## Claims

1. A playback apparatus comprising:
a receiving section that receives program information from an outside;
a program information storage section in which the program information received by the receiving section is recorded and accumulated;
a program guide data generating section that generates program guide data on a basis of past program information accumulated in the program information storage section, the program guide data serving as an electronic program guide in which the past program information is arranged in time series;
a display section that displays the electronic program guide on a basis of the program guide data;
a selecting section that causes program content to play back to be selected via the program information, from the electronic program guide displayed on the display section;
a communication section that communicates data via a network with an external device having the program content;
a program content storage section to which the program content is recorded, the program content storage section being provided separately from the external device;
a recording management section that manages a recording location of the program content, and in response to an acquisition request for the program content, supplies recording location information indicating the program content storage section if the program content is stored in the program content storage section, and supplies recording location information indicating the external device if the program content is not stored in the program content storage section; and
a playback control section that sends, when program content to play back is selected from the electronic program guide, an acquisition request for the program content to the recording management section, acquires recording location information for the program content to play back from the recording management section, and acquires and plays back the program content from the program content storage section or the external device indicated by the recording location information.

2. The playback apparatus according to Claim 1, wherein:
the receiving section receives the program content from an outside;
the program content storage section stores the program content received by the receiving section;
the program guide data generating section generates program guide data on a basis of past and future program information accumulated in the program information storage section, the program guide data serving as an electronic program guide in which the past program information and the future program information are arranged integrally in time series;
the selecting section causes program content to record to be selected via the program information, from the electronic program guide displayed on the display section;
the recording management section supplies recording location information indicating the program content storage section, in response to a recording request for the program content; and
the playback apparatus comprises a recording control section that sends, when program content to record is selected from the electronic program guide, a recording request for the program content to the recording management section, acquires recording location information for the program content to record from the recording management section, and sends the program content to the program content storage section indicated by the recording location information.

3. The playback apparatus according to Claim 2, wherein:
the recording management section manages a recording condition of the program content to the program content storage section; and
the program guide data generating section acquires the recording condition of the program content from the recording management section, and generates the program guide data showing the recording condition of the program content in association with the program information of the electronic program guide.

4. The playback apparatus according to Claim 3, wherein the program guide data generating section generates the program guide data showing a recording complete mark in the electronic program guide, in association with the program information indicating the program content of which recording to the program content storage section has been completed.

5. The playback apparatus according to Claim 3, wherein the program guide data generating section generates the program guide data showing a recording standby mark in the electronic program guide, in association with the program information indicating the program content which has been selected for recording by the selecting section and of which recording to the program content storage section has not been started.

6. The playback apparatus according to Claim 3, wherein the program guide data generating section generates the program guide data showing a recording-in-progress mark in the electronic program guide, in association with the program information indicating the program content which has been selected for recording by the selecting section and which is being recorded to the program content storage section.

7. The playback apparatus according to Claim 6, wherein the recording-in-progress mark shows a ratio of a completed recording time with respect to a total recording time of the program content.

8. The playback apparatus according to Claim 1, wherein:
the recording management section manages a recording condition of the program content to the program content storage section; and
the program guide data generating section acquires the recording condition of the program content from the recording management section, and generates the program guide data showing a recording complete mark in the electronic program guide, in association with the program information indicating the program content stored in the program content storage section.

9. The playback apparatus according to Claim 1, wherein the program content storage section is provided in another external device that is connected via a network.

10. A program content transmitting and receiving system comprising:
a broadcast station server; and
a playback apparatus,
the broadcast station server including
a storage section that stores program content that has been broadcast, and
a broadcast station control section that communicates data via a network with the playback apparatus that plays back program content, and transmits the program content to the playback apparatus,
the playback apparatus including
a receiving section that receives program information from an outside,
a program information storage section in which the program information received by the receiving section is recorded and accumulated,
a program guide data generating section that generates program guide data on a basis of past program information accumulated in the program information storage section, the program guide data serving as an electronic program guide in which the past program information is arranged in time series,
a display section that displays the electronic program guide on a basis of the program guide data,
a selecting section that causes program content to play back to be selected via the program information, from the electronic program guide displayed on the display section,
a communication section that communicates data via a network with the broadcast station server having the program content,
a program content storage section to which the program content is recorded, the program content storage section being provided separately from the broadcast station server,
a recording management section that manages a recording location of the program content, and in response to an acquisition request for the program content, supplies recording location information indicating the program content storage section if the program content is stored in the program content storage section, and supplies recording location information indicating the broadcast station server if the program content is not stored in the program content storage section, and
a playback control section that sends, when program content to play back is selected from the electronic program guide, an acquisition request for the program content to the recording management section, acquires recording location information for the program content to play back from the recording management section, and acquires and plays back the program content from the program content storage section or the broadcast station server indicated by the recording location information.
